# EUROPEAN PATENT SPECIFICATION

(11) **EP 2 961 576 B1**
(45) Date of publication and mention of the grant of the patent: **14.10.2020**
(21) Application number: 14711454.0
(22) Date of filing: 26.02.2014
(51) Int. Cl.: B25J 9/00, B25J 15/12, B25J 19/00

(54) **GRIPPING APPARATUS AND METHOD OF MANUFACTURING A GRIPPING APPARATUS**
GREIFVORRICHTUNG UND VERFAHREN ZUR HERSTELLUNG EINER GREIFVORRICHTUNG
APPAREIL DE PRÉHENSION ET PROCÉDÉ DE FABRICATION D'UN APPAREIL DE PRÉHENSION

(30) Priority: 27.02.2013 US 201361769984 P
(43) Date of publication of application: 06.01.2016
(73) Proprietor: Materialise N.V., 3001 Leuven (BE)
(72) Inventor: SCHIETTECATTE, Philippe, B-3001 Leuven (BE); PLAGHKI, Roman, B-3001 Leuven (BE)
(74) Representative: DeltaPatents B.V.
(86) International application number: PCT/EP2014/053774
(87) International publication number: WO 2014/131810

(56) References cited:
- WO-A1-01/79707
- WO-A2-2009/027979
- DE-B3-102006 009 559
- JP-A- S4 916 164
- US-A- 5 251 538

## Description

### BACKGROUND OF THE INVENTION

### Field of the Invention

The present application relates to a gripping apparatus. This application also relates to a method of manufacturing such a gripping apparatus.

### Description of the Related Technology

Gripping systems are widely used in industry, such as automated assembly and packaging lines, laboratory environments, etc. Grippers are a valuable tool that may be used when objects or parts need to be picked up, transported, manipulated, and/or placed from one place to another.

Various types of grippers exist, including pneumatic grippers (also commonly referred to as hydraulic grippers), electric grippers, and suction cup grippers. Pneumatic grippers are actuated using a pressurized or compressed air or liquid. Variations in the pressure of the air or liquid may cause a displacement of a part of the gripper via an actuator or piston system. Electric grippers use an electrical motor that activates the relative movement of mechanical parts. Suction cup grippers use elastic cups that attach to an object and are activated by a vacuum.

Gripping systems may include many parts that must be individually manufactured and assembled to create the gripping system. Gripping systems may further require complex driving systems. The complex manufacturing and assembly combined with the driving systems leads to expensive, complex, and cumbersome gripping systems. Furthermore, pneumatic gripping systems typically include a bellow or actuator used to actuate the gripper that is separate from the gripping members used to grip the objects or parts. The separate bellow or actuator leads to limited functionality and maneuverability of the gripping members.

US 5,251,538 A, WO 01/79707 A1 and JP S49 16164 A disclose examples of a gripping member configured to act as an actuator and to grip an object, the gripping member having an asymmetrical shape and being comprised of an integrated actuator that includes an asymmetrical cross-section and that is actuated by an actuating medium provided by an actuating source, the gripping member being configured to be displaced upon actuation of the actuator in a direction based on the asymmetrical cross-section of the actuator.

Accordingly, there is a need for an improved gripping apparatus that allows a better simulation of a human hand grip, and an improved method of manufacturing such a gripping apparatus that reduces the time, cost, and materials needed for production.

### SUMMARY

The present invention provides a gripping apparatus according to claim 1 and a method of manufacturing such a gripping apparatus as defined in the independent claim 11.

Details of one or more implementations of the subject matter described in this specification are set forth in the accompanying drawings and the description below. Other features, aspects, and advantages will become apparent from the description, the drawings, and the claims.

### BRIEF DESCRIPTION OF THE DRAWINGS

The following description of the figures is merely exemplary in nature and is not intended to limit the present teachings, their application or uses. Throughout the drawings, corresponding reference numerals indicate like or corresponding parts and features. The relative dimensions of the following figures may not be drawn to scale.
Figure 1 is one example of a system for designing and manufacturing three-dimensional (3-D) objects.
Figure 2 is a functional block diagram of one example of a computer of Figure 1.
Figure 3 is a process for manufacturing a 3-D object.
Figure 4 illustrates an example of a gripping apparatus.
Figure 5 illustrates another example of a gripping apparatus.
Figure 6A illustrates an example of a gripping apparatus having an actuator with an asymmetrical cross-section.
Figure 6B illustrates an example of an asymmetrical cross-section of an actuator of a gripping apparatus in accordance with the present invention.
Figure 7 illustrates an example of a gripping apparatus in accordance with the present invention, including a displaced gripping member.
Figure 8 illustrates an example of an asymmetrical shape of a gripping member of a gripping apparatus.
Figure 9 is a flowchart of one example of a process for manufacturing a gripping apparatus.
Figures 10A-10D illustrate yet another example of a gripping apparatus.
Figure 11 provides an example of excessive deformation of an actuator portion in a gripping apparatus without a guiding system.

### DETAILED DESCRIPTION OF CERTAIN INVENTIVE EMBODIMENTS

The following detailed description is directed to certain specific embodiments. However, the teachings herein can be applied in a multitude of different ways. In this description, reference is made to the drawings wherein like parts are designated with like numerals throughout.

The present invention will be described with respect to particular embodiments but the invention is not limited thereto but only by the claims.

As used herein, the singular forms "a", "an", and "the" include both singular and plural referents unless the context clearly dictates otherwise.

The terms "comprising", "comprises" and "comprised of' as used herein are synonymous with "including", "includes" or "containing", "contains", and are inclusive or openended and do not exclude additional, non-recited members, elements or method steps. The terms "comprising", "comprises" and "comprised of' when referring to recited components, elements or method steps also include embodiments which "consist of' said recited components, elements or method steps.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

Reference throughout this specification to "one embodiment," "an embodiment," "some aspects," "an aspect," or "one aspect" means that a particular feature, structure or characteristic described in connection with the embodiment or aspect is included in at least one embodiment of the present invention. Thus, appearances of the phrases "in one embodiment," "in an embodiment," "some aspects," "an aspect," or "one aspect" in various places throughout this specification are not necessarily all referring to the same embodiment or aspects, but may. Furthermore, the particular features, structures or characteristics may be combined in any suitable manner, as would be apparent to a person skilled in the art from this disclosure, in one or more embodiments or aspects. Furthermore, while some embodiments or aspects described herein include some but not other features included in other embodiments or aspects, combinations of features of different embodiments or aspects are meant to be within the scope of the invention, and form different embodiments or aspects, as would be understood by those in the art. For example, in the appended claims, any of the features of the claimed embodiments or aspects can be used in any combination.

As described above, gripping systems and apparatuses (also referred to herein as "grippers") are used in various industries. Applications include using grippers, for example, in automated assembly and packaging lines, and also in laboratory environments. Grippers may be used to pick up, transport, manipulate, and/or place objects or parts as needed in the particular application for which the gripper is being used. A gripper typically includes many parts that must be individually manufactured and assembled. It often is expensive and time consuming to build each part of the apparatus individually and then assemble each of the parts to form the gripping apparatus. Driving systems for conventional grippers also tend to have complex designs. These complex designs are often necessary to meet performance specifications, and they can also impose additional cost and complexity to the manufacturing process.

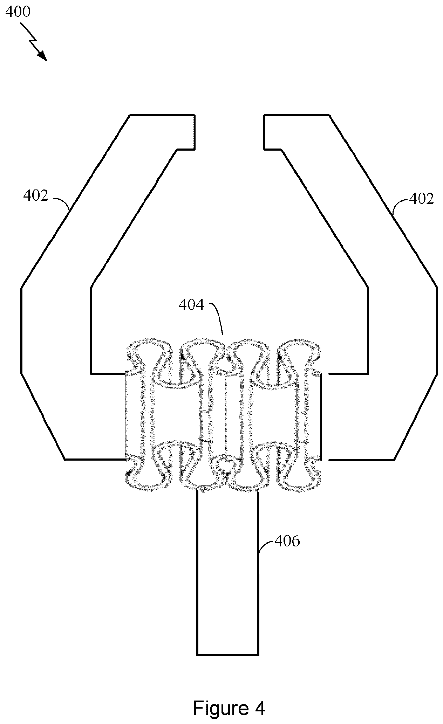

Conventional pneumatic gripping apparatuses typically include a bellow or actuator that is used to actuate the gripper. In these pneumatic grippers, the bellow or actuator is separate from the gripping members that are used to grip the object. The separate bellow or actuator often limits the functionality and maneuverability of the gripping members. Figure 4 provides an example of a pneumatic gripper having limited a separate bellow. As shown, a gripping apparatus 400 may include gripping members 402. The gripping member may take the form of substantially rigid projections which move inward. This inward movement is caused by a bellow 404 and/or an actuating source 406. The bellow 404 is separate from the gripping members 402. As a result, it provides only for a limited range of motion by the gripping members 402.

The inventors have recognized the need for systems and methods which provide the ability to design and manufacture of grippers having increased functionality and maneuverability at a reduced cost. In order to achieve these goals, a gripping apparatus may be designed and manufactured for a specific application through additive manufacturing techniques. For example, additive manufacturing may be used to manufacture the entire gripping apparatus. Using additive manufacturing obviates the need for assembly of different parts. Additive manufacturing or Rapid Prototyping and Manufacturing (RP&M) may be defined as a group of techniques used to fabricate an object using, for example, a three-dimensional (3-D) computer aided design (CAD) data of the object. Currently, a multitude of Rapid Prototyping techniques are available, including stereolithography (SLA), selective laser sintering (SLS), fused deposition modeling (FDM), foil-based techniques, and the like.

A common feature of additive manufacturing and RP&M techniques is that objects are typically built layer by layer. Stereolithography, for example, utilizes a vat of liquid photopolymer "resin" to build an object a layer at a time. On each layer, an electromagnetic ray traces a specific pattern on the surface of the liquid resin that is defined by the two-dimensional cross-sections of the object to be formed. The electromagnetic ray may be delivered as one or more laser beams which are computer-controlled. Exposure of the resin to the electromagnetic ray cures, or, solidifies the pattern traced by the electromagnetic ray, and causes it to adhere to the layer below. After a coat of resin has been had been polymerized, the platform descends by a single layer thickness and a subsequent layer pattern is traced, adhering the newly traced layer pattern to the previous layer. A complete 3-D object may be formed by repeating this process.

As discussed above, selective laser sintering (SLS) is another additive manufacturing technique. SLS uses a high power laser or another focused heat source to sinter or weld small particles of plastic, metal, or ceramic powders into a mass that represents the 3-D object to be formed. SLS may be used to manufacture apparatuses requiring elastic or flexible materials. Materials used in the SLS process may include polyamide, polypropylene, and/or thermoplastic polyurethane. The different materials may be chosen for use in the SLS process based on the particular object or production method. For example, polypropylene may be used in a high-volume production of an object.

Fused deposition modeling (FDM) provides yet another additive manufacturing approach. FDM and other related techniques make use of a temporary transition from a solid material to a liquid state, usually due to heating. The material is driven through an extrusion nozzle in a controlled manner, and the material is then deposited a specified location. Details of one suitable FDM process are explained in U.S. Patent No. 5,141,680.

Foil-based techniques may also be used to support additive manufacturing. Foil-based techniques involve the use of glue or photo polymerization to fix coats of resin to each other. The desired object is then cut from these these coats, or the object is polymerized from these coats.

Typically, additive manufacturing and RP&M techniques start from a digital representation of the 3-D object to be formed. Generally, the digital representation is sliced into a series of cross-sectional layers which are overlaid to form the object as a whole. Information about the cross-sectional layers of the 3-D object is stored as cross-sectional data. The RP&M system utilizes this cross-sectional data for the purpose of building the object on a layer-by-layer basis. The cross-sectional data used by the RP&M system may be generated using a computer system. The computer system may include software such as computer aided design and manufacturing (CAD/CAM) software to assist this process.

In some embodiments, a selective laser sintering (SLS) apparatus may be used for the generation of a gripping apparatus. It should be understood however, that various types of rapid manufacturing and tooling may be used for accurately fabricating these gripping apparatus including, but not limited to, stereolithography (SLA), Fused Deposition Modeling (FDM), or milling.

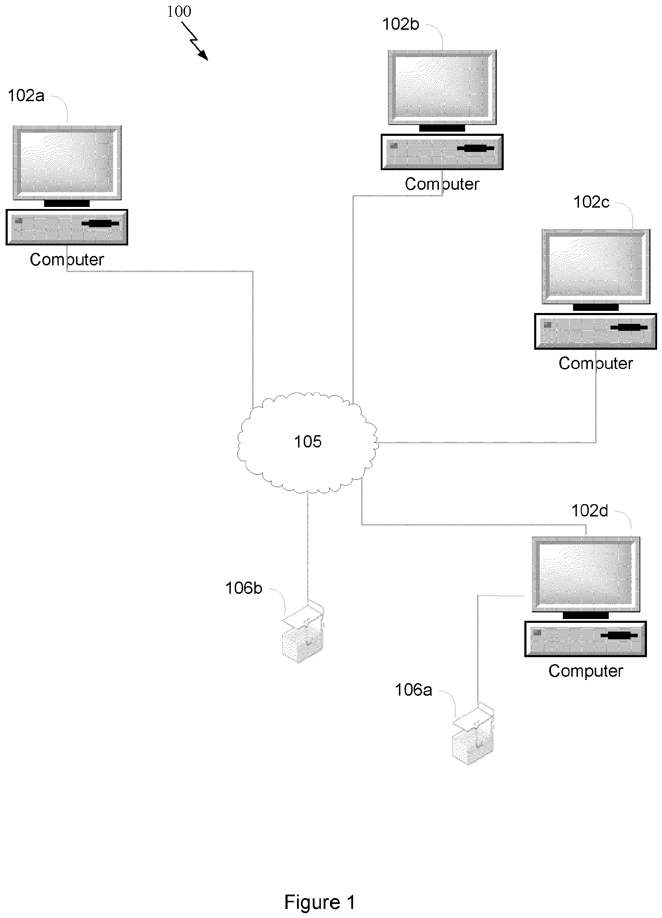

Figure 1 depicts one example of a system 100 for designing and manufacturing 3-D devices and/or products. The system 100 may be configured to support the techniques described herein. For example, the system 100 may be configured to design and generate a gripping apparatus, such as any one or more of those described in further detail below. In some embodiments, the system 100 may include one or more computers 102a-102d. The computers 102a-102d may take various forms such as, for example, any workstation, server, or other computing device capable of processing information. The computers 102a-102d may be connected by a computer network 105. The computer network 105 may be the Internet, a local area network, a wide area network, or some other type of network. The computers may communicate over the computer network 105 via any suitable communications technology or protocol. The computers 102a-102d may share data by transmitting and receiving information such as software, digital representations of 3-D objections, commands and/or instructions to operate an additive manufacturing device, and the like.

The system 100 further may include one or more additive manufacturing devices 106a and 106b. These additive manufacturing devices may take the form of 3-D printers or some other manufacturing device as known in the art. In the example shown in Figure 1, the additive manufacturing device 106a is connected to the computer 102a. The additive manufacturing device 106a is also connected to computers 102a-102c via the network 105 which connects computers 102a-102d. Additive manufacturing device 106b is also connected to the computers 102a-102d via the network 105. A skilled artisan will readily appreciate that an additive manufacturing device such as devices 106a and 106b may be directly connected to a computer 102, connected to a computer 102 via a network 105, and/or connected to a computer 102 via another computer 102 and the network 105.

Although a specific computer and network configuration is described in Figure 1, a skilled artisan will also appreciate that the additive manufacturing techniques described herein may be implemented using a single computer configuration which controls and/or assists the additive manufacturing device 106, without the need for a computer network.

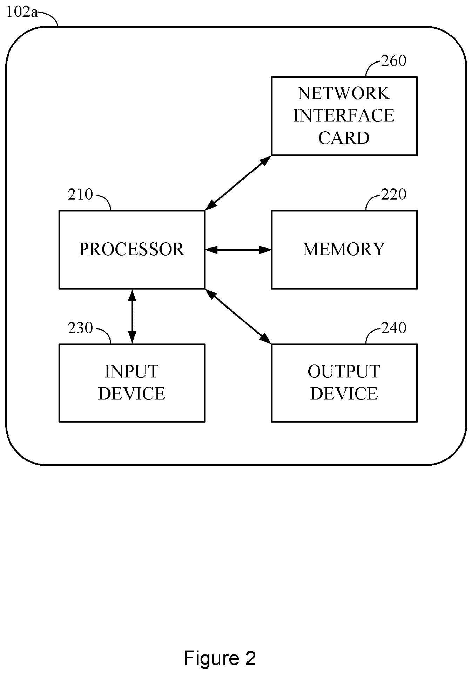

Turning to Figure 2, a more detailed view of computer 102a shown in Figure 1 is provided. The computer 102a includes a processor 210. The processor 210 is in data communication with various computer components. These components may include a memory 220, an input device 230, and an output device 240. In certain embodiments, the processor may also communicate with a network interface card 260. Although described separately, it is to be appreciated that functional blocks described with respect to the computer 102a need not be separate structural elements. For example, the processor 210 and network interface card 260 may be embodied in a single chip or board.

The processor 210 may be a general purpose processor, a digital signal processor (DSP), an application specific integrated circuit (ASIC), a field programmable gate array (FPGA) or other programmable logic device, a discrete gate or transistor logic, discrete hardware components, or any suitable combination thereof designed to perform the functions described herein. A processor may also be implemented as a combination of computing devices, e.g., a combination of a DSP and a microprocessor, a plurality of microprocessors, one or more microprocessors in conjunction with a DSP core, or any other such configuration.

The processor 210 may be coupled, via one or more buses, to read information from or write information to memory 220. The processor may additionally, or in the alternative, contain memory, such as processor registers. The memory 220 may include processor cache, including a multi-level hierarchical cache in which different levels have different capacities and access speeds. The memory 220 may further include random access memory (RAM), other volatile storage devices, or non-volatile storage devices. The storage can include hard drives, optical discs, such as compact discs (CDs) or digital video discs (DVDs), flash memory, floppy discs, magnetic tape, and Zip drives.

The processor 210 may also be coupled to an input device 230 and an output device 240 for, respectively, receiving input from and providing output to a user of the computer 102a. Suitable input devices include, but are not limited to, a keyboard, a rollerball, buttons, keys, switches, a pointing device, a mouse, a joystick, a remote control, an infrared detector, a voice recognition system, a bar code reader, a scanner, a video camera (possibly coupled with video processing software to, e.g., detect hand gestures or facial gestures), a motion detector, a microphone (possibly coupled to audio processing software to, e.g., detect voice commands), or other device capable of transmitting information from a user to a computer. The input device may also take the form of a touch screen associated with the display, in which case a user responds to prompts on the display by touching the screen. The user may enter textual information through the input device such as the keyboard or the touch-screen. Suitable output devices include, but are not limited to, visual output devices, including displays and printers, audio output devices, including speakers, headphones, earphones, and alarms, additive manufacturing devices, and haptic output devices.

The processor 210 further may be coupled to a network interface card 260. The network interface card 260 prepares data generated by the processor 210 for transmission via a network according to one or more data transmission protocols. The network interface card 260 may also be configured to decode data received via the network. In some embodiments, the network interface card 260 may include a transmitter, receiver, or both. Depending on the specific embodiment, the transmitter and receiver can be a single integrated component, or they may be two separate components. The network interface card 260, may be embodied as a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein.

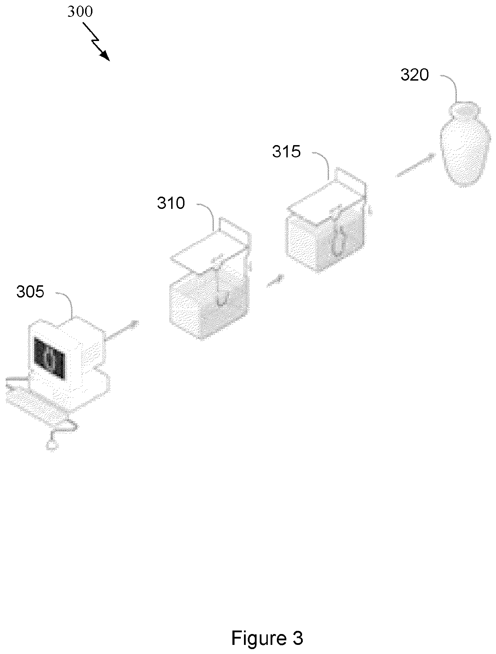

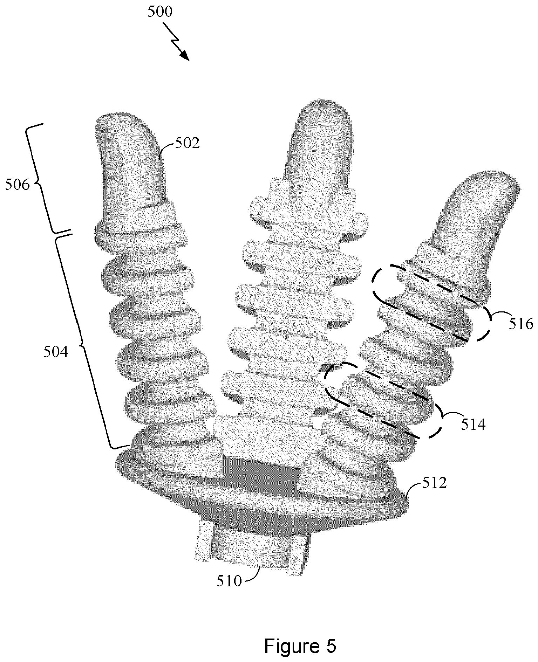

Using the devices described in connection with Figures 1 and 2 above, an additive manufacturing process may be employed to produce a 3-D product or device. Figure 3 is an illustration of one such process. In particular, Figure 3 shows a general process 300 for manufacturing a gripping apparatus, such as those that will be described in further detail below in connection with Figures 5-8.

The process begins at step 305, where a digital representation of the device to be manufactured is designed using a computer, such as the computer 102a. In some embodiments, a 2-D representation of the device may be used to create a 3-D model of the device. Alternatively, 3-D data may be input to the computer 102a for aiding in designing the digital representation of the 3-D device. The process continues to step 310, where information is sent from the computer 102a to an additive manufacturing device, such as additive manufacturing device 106. Next, at step 315, the additive manufacturing device 106 begins manufacturing the 3-D device by performing an additive manufacturing process using suitable materials. Suitable materials include, but are not limited to polypropylene, thermoplastic polyurethane, polyurethane, acrylonitrile butadiene styrene (ABS), polycarbonate (PC), PC-ABS, polyamide, polyamide with additives such as glass or metal particles, methyl methacrylate-acrylonitrile-butadiene-styrene copolymer, resorbable materials such as polymer-ceramic composites, and other similar suitable materials. In some embodiments, commercially available materials may be utilized. These materials may include: DSM Somos® series of materials 7100, 8100, 9100, 9420, 10100, 11100, 12110, 14120 and 15100 from DSM Somos; ABSplus-P430, ABSi, ABS-ESD7, ABS-M30, ABS-M30i, PC-ABS, PC-ISO, PC, ULTEM 9085, PPSF and PPSU materials from Stratasys; Accura Plastic, DuraForm, CastForm, Laserform and VisiJet line of materials from 3-Systems; Aluminium, CobaltChrome and Stainless Steel materials; Maranging Steel; Nickel Alloy; Titanium; the PA line of materials, PrimeCast and PrimePart materials and Alumide and CarbonMide from EOS GmbH. Using the appropriate materials, the additive manufacturing device then completes the process at step 320, where the 3-D device is generated.

Using a process such as process 300 described in connection with Figure 3, a gripping apparatus may be manufactured using additive manufacturing processes. Using an additive manufacturing process such as process 300 allows for a gripping apparatus to be manufactured with one or more gripping members that can both act as actuators and also grip objects. Various specific additive manufacturing techniques may be used to produce a gripping apparatus. These techniques include selective laser sintering, stereolithography, fused deposition modeling, or a foil-based technique. Utilizing these and other additive manufacturing techniques, the entire gripping apparatus may be produced without requiring the separate manufacture and assembly of various different parts.

Figure 5 provides an example of a gripping apparatus which may be manufactured using the techniques described above. In this particular example, the gripping members have an asymmetrical shape and may comprise of an integrated actuator having an asymmetrical cross-section. Because a gripping member may comprise of the actuator, the actuator itself may act as the gripping member. Each of the gripping members comprising the integrated actuator may be configured to be displaced upon actuation of the actuator in a direction based on the asymmetrical cross-section of the actuator. The gripping apparatus may further comprise an actuating source configured to provide an actuating medium for actuating each actuator of the one or more gripping members.

With specific reference now to Figure 5, an example of a gripping apparatus 500 is provided. The gripping apparatus 500 comprises three gripping members 502, a base 512, and an inlet 510 through which an actuating medium may be input from an actuating source (not shown). In some embodiments, the actuating source may be included as part of the gripping apparatus 500. Alternatively, the actuating source may be a separate component that separately attaches to the gripping apparatus 500. For example, the actuating source may take the form of a capsule filled with compressed air or compressed liquid. The capsule may screw into, or otherwise attach to, the gripping apparatus 500 at or near the inlet. A skilled artisan will appreciate that depending upon the specific application, a gripping apparatus such as apparatus 500 may include more or less than three gripping members 502, and it may also include more than one inlet 510.

Unlike the gripping members 402 illustrated in Figure 4, the gripping member 502 is configured to act both as an actuator and as a gripper, because the actuator 504 is integrated into the gripping member 502. Accordingly, in these configurations, the actuator 504 itself is the gripping member 502. In some embodiments, the integrated actuator 504 is a pneumatically activated actuator. This pneumatically activated actuator may be configured to be displaced in a desired direction in response to receiving an actuating medium from an actuating source. For example, the actuating source may deliver compressed air or liquid, or any other appropriate actuating medium, to the inlet 510 in order to actuate each integrated actuator.

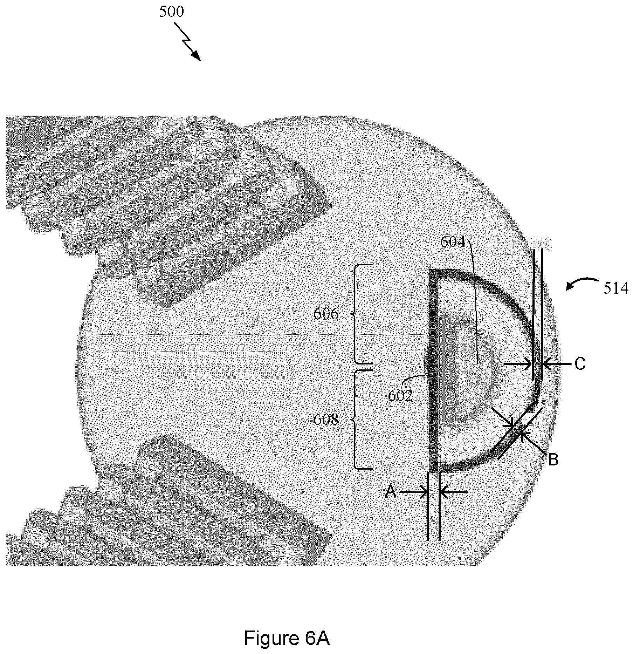

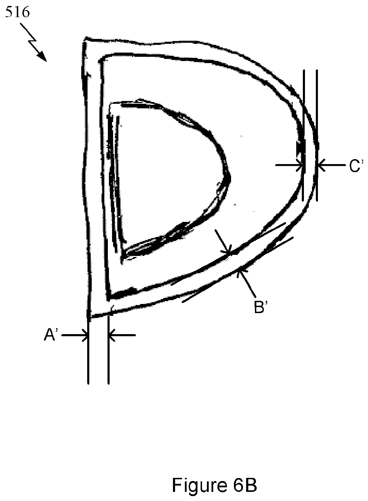

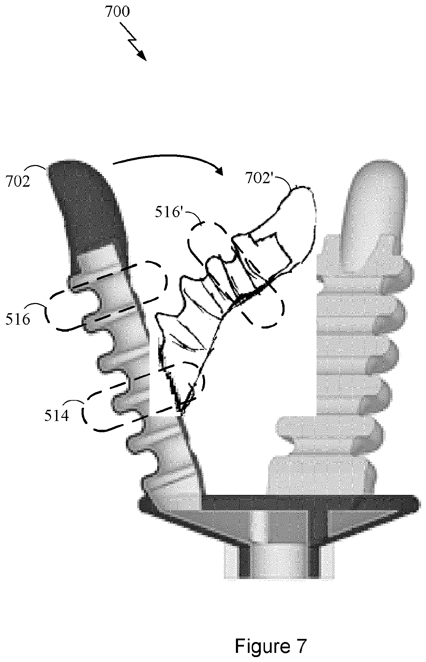

In some embodiments, the gripping member 502 may include an integrated actuator area 504 and a tip 506. The integrated actuator 504 includes an asymmetrical cross-section. This asymmetrical cross-section is useful in manipulating the direction in which the gripping member 502 is displaced. The gripping member 502 also may include an asymmetrical shape including a discontinuous wall thickness over some or all of the length of the gripping member 502. As a result of the asymmetrically designed geometry of the actuator 504, the gripping member 502 may be displaced in a desired direction upon actuation of the actuator by the actuating source, and may make contact with an object in a desired manner. For example, an asymmetrical cross-section of the actuator 504 may include a first portion that is thicker than a second portion of the actuator to allow the gripping member 502 to be displaced upon actuation of the actuator 504 in the direction toward the first portion. In some embodiments, the first portion may be an inner portion of the gripping member 502 in an area closest to the object to be gripped so that the gripping member 502 is displaced in an inward direction. Details regarding the specific asymmetrical shape of the gripping member and the asymmetrical cross-section of the actuator will be discussed further below with respect to Figures 6 and 7.

One or more of the gripping members may also include ridges over some or all of the length of the one or more of the gripping members 502. These ridges typically provide flexibility and aid in guiding the displacement of the gripping members 502. In some embodiments, one or more of the gripping members may not include an integrated actuator. These gripping members may remain stationary while the gripping members having an integrated actuator are displaced. These embodiments may provide a benefit in that they reduce the amount of actuating medium that is required to operate the gripping apparatus 500.

In some embodiments, although the actuator 504 is integrated into the gripping member 502, the tip 506 may be designed to remain stationary. In these embodiments, the actuator portion 504 of the gripping member 502 may be displaced in the desired direction based on the geometry of the actuator 504 while the tip 506 remains stationary. In some embodiments, the tip 506 may also comprise of the actuator 504 so that the tip 506 also includes an asymmetrical cross-section and is displaced upon actuation in the desired direction. For example, the tip 506 may include a different geometry (e.g., cross-section, thickness along the length, etc.) so that the tip 506 is displaced differently than the actuator portion 504. In some embodiments, the tip 506 may include different textures, such as a sticky or rough surface, to facilitate handling and manipulation of objects.

Controlling the manipulation of each gripping member based on the asymmetrical properties of the actuator allows the gripping apparatus 500 to be manufactured at reduced costs, as expensive actuating devices and materials are not required. The integrated actuator thus allows the gripping apparatus 500 to be designed and manufactured at reduced cost while also allowing it to be used to accomplish various complex tasks for diverse applications that may require more than a simple pick up, manipulate, and place operation. For example, designing the gripping apparatus 500 to include an actuator integrated with each gripping member may allow the gripping apparatus 500 to function like a human hand, with each gripping member emulating a human finger and thus increasing the functionality and maneuverability of the gripping apparatus 500. For example, designing the tip 506 to remain stationary or to move differently than the rest of the gripping member 502 helps to simulate the movement of an actual human hand. Further, the actuator geometry may be designed so that only the tips of each gripping member make contact with the object being picked up, manipulated, etc., similar to that of a human hand. As another example, the geometry of each actuator within each respective gripping member may be designed so that the gripping apparatus 500 picks up an object like a baseball so that the object is fully enclosed by the gripping members. As a further example, one actuator may be designed to function like a human thumb, while the remaining actuators may be designed to function like the other fingers of a human hand. In some embodiments, the tip 506 may not be limited to fingertip or fingertip-type tip. For example, the tip 506 may include a two-point gripper including two contact points. In another example, the tip 506 may include a clamp so that objects may be picked up and/or manipulated with a single gripping member. As a further example, the tip 506 may include a pin-type tip. In some embodiments, the gripper may include different layers. For example, a first layer may include a hand-like structure, and a second layer may include the finger-type structure. In this example, the gripper may operate like an entire human hand. One of skill in the art will understand that other gripper shapes and configurations may include an integrated actuator to operate the gripper as described herein. Accordingly, by including an integrated actuator, the gripping apparatus 500 may be designed to handle fragile items that may otherwise be damaged by crude gripping apparatuses. The gripping apparatus 500 may also be designed to handle intricate manipulation processes that were otherwise not possible with less maneuverable grippers.

In some embodiments, the gipping members may be integrated with the base 512 so that the gripping members cannot be readily removed. In some embodiments, one or more of the gripping members may be removable from the gripping apparatus 500 so that a user may replace defective or old gripping members and/or change the functionality of the gripping apparatus 500 for use with different applications. For example, a user may want to replace one or more existing gripping members with gripping members that provide advanced maneuverability for a particular application that requires complex manipulation of an object. The user may remove an existing gripping member and replace it with the new one. As another example, a user may replace an existing gripping member with a thumb-like gripping member to provide further manipulation capabilities.

As described above, one or more actuators of the gripping apparatus 500 may include an asymmetrical cross-section that is designed in a way to control the direction in which each corresponding gripping member is displaced. Accordingly, the gripping apparatus 500 may be designed and manufactured without the need for additional tools or materials for displacing the gripping members. Cross-sections 514 and 516 are examples of asymmetrical cross-sections that may be designed differently so that the portions of the gripping member including each cross-section are displaced by a desired amount in a desired direction.

Figure 6A illustrates an example of a gripping apparatus 500 comprising a gripping member that includes an actuator 602 with an asymmetrical cross-section 514. Different portions A, B, and C of the actuator 602 cross-section are shown with different wall thicknesses. In the example illustrated in Figure 6A, the wall thickness of portion A is larger than the wall thickness of portion B, which is larger than the wall thickness of portion C (A > B > C). For example, portion A may be 1.4 mm thick, portion B may be 1.1 mm thick, and portion C may be 0.8 mm thick. One of skill in the art will understand that differing wall thicknesses other than those described herein may be used for each portion in order to manipulate the direction of the gripping member displacement. Accordingly, the asymmetrical cross-section of the actuator 602 may include a first portion A that is thicker than the second portion B and third portion C. Designing portion A to be thicker than portions B and C causes the gripping member with the actuator 602 to be displaced upon actuation in the direction toward portion A. For example, an actuating source may supply an actuating medium (e.g., compressed air, compressed liquid, etc.) through the inlet 604 to actuate the actuator 602. Upon actuation, the gripping member including the actuator 602 is displaced about portion A due to portion A having a larger thickness than the other portions of the cross-section.

Figure 6B illustrates another example of an asymmetrical cross-section 516 of an actuator of a gripping apparatus 500. With reference to Figure 5, cross-section 516 is located in a distal portion of the gripping member relative to cross-section 514. Different portions A', B', and C' of the actuator cross-section 516 are shown with different wall thicknesses. The wall thickness of portion A' is larger than the wall thickness of portion B', which is larger than the wall thickness of portion C' (A' > B' > C'). The thickness differential of portion A' compared to portions B' and C' may be less for cross-section 516 than the thickness differential of portion A compared to portions B and C. For example, portion A of cross-section 514 may be thicker relative to portions B and C as compared to portion A' relative to portions B' and C'. Accordingly, a thickness ratio of A/(B+C) at cross-section 514 may be higher than the thickness ratio of A'/(B'+C') at cross-section 516. For example, portion A may be 1.2 mm thick, portion B may be 1.0 mm thick, and portion C may be 0.8 mm thick. A skilled artisan will appreciate that depending upon the specific application, differing wall thicknesses other than those described herein may be used for each portion in order to manipulate the direction of the gripping member displacement. Due to the thickness ratio of cross-section 516 being smaller than the thickness ration of cross-section 514, the part of the gripping member including cross-section 516 will be displaced toward portion A' less dramatically than the part of the gripping member including cross-section 514 is displaced toward portion A.

Each different cross-section along the length of the integrated actuator 602 may include differing thicknesses at portions A, B, and C so that the gripping member is displaced differently at each cross-section or collectively at a group of cross-sections. Figure 7 illustrates an example of a gripping apparatus 700 including a displaced gripping member 702'. For example, the gripping member 702 includes an integrated actuator designed with different cross-section thicknesses, including cross-sections 514 and 516 as described above, so that the gripping member mimics the movement of a human finger. For example, a middle portion of the gripping member 702 with one or more cross-sections, including cross-section 514, may be designed to have the most displacement in a single direction upon actuation compared to other portions of the gripping member so that the middle portion bends similar to that of a human proximal inter-phalangeal joint. To achieve this type of movement, the middle portion may include one or more cross-sections, including cross-section 514, with a portion A that is thicker relative to portions B and C of that cross-section as compared to any other cross-section of the gripping member. For example, a thickness ratio of A/(B+C) at the cross-section of the middle portion may be higher than the thickness ratio of any other cross-section of the gripping member. The large thickness differential of portion A compared to portions B and C of the middle portion cross-section causes the middle portion to be displaced further than any other portion of the gripping member in the direction of portion A, much like the proximal inter-phalangeal joint is displaced as a human finger is bent.

As another example, an upper distal portion of the gripping member 702 may be designed with one or more cross-sections, including cross-section 516, with thicknesses that cause the upper portion to be displaced less dramatically than the middle portion. For example, the upper distal portion may be designed to move relative to the middle portion similar to the manner in which a human distal inter-phalangeal joint is displaced compared to the proximal inter-phalangeal joint. Each of the remaining cross-sections of the gripping member 702 with the integrated actuator may be designed to include various thicknesses at portions A, B, and C so that the desired displacement of the gripping member is achieved. For example, each cross-section of the integrated actuator may be designed so that the gripping member 702 is displaced from its at-rest position to its actuated position 702'. When the gripping member 702 is displaced, cross-section 516 is displaced to position 516'. The gripping member 702 is displaced more so at the middle portion (including cross-section 514) than the upper distal portion (including cross-section 516). As described above, the different in displacement at cross-section 516 compared to cross-section 514 is due to the thickness differential of portion A' compared to portions B' and C' being less than the thickness differential of portion A compared to portions B and C.

In some embodiments, the tip at the distal end of each non-stationary gripping member may also be designed to remain stationary while the remaining portion of the gripping member is displaced upon actuation. This may further mimic the movement of the human hand, as only the portions of the gripping member corresponding to the joints of the human hand may be designed to be displaced when actuated. The tip may be designed to remain stationary by not including the actuator in the tip so that the actuator is only included in the remaining portion of the gripping member. In some embodiments, the tip may comprise of the actuator so that the tip is also displaced by a desired amount when the actuation medium is supplied. For example, the tip portion of the actuator may include less differential between the thicknesses of cross-section portions A, B, and C so that less displacement is achieved upon actuation in the direction of portion A than, for example, the middle portion described above. As an example, the thickness of each portion A, B, and C of the cross-section at the tip may be designed so that only the tip makes contact with the object being picked up, manipulated, etc.

In some embodiments, one or more of the gripping member actuators may be designed to function like a human thumb, while the remaining actuators may be designed to function like the other fingers of a human hand. For example, the thicknesses of cross-section portions A, B, and C of a gripping member actuator may be designed so that the particular gripping member is displaced in a direction relative to the remaining gripping members, similar to that of a human thumb. For example, referring again to Figure 6A, the gripping member may be designed to move in a diagonal direction rather than in a strictly inward direction. To facilitate a movement in a diagonal direction, portion A may be thicker at a first end 608 compared to a second end 606 so that the gripping member is displaced toward the first end 608. The design of at least one of the gripping members to operate similar to that of a thumb, such as moving in a diagonal direction toward other gripping members, may allow more complex gripping and manipulation functionality. For example, the gripping apparatus may pick up an object so that the object is fully enclosed by the gripping members, similar to how a human hand grips a baseball. As another example, the gripping member may be configured to pick a coffee cup up like a human hand would do so.

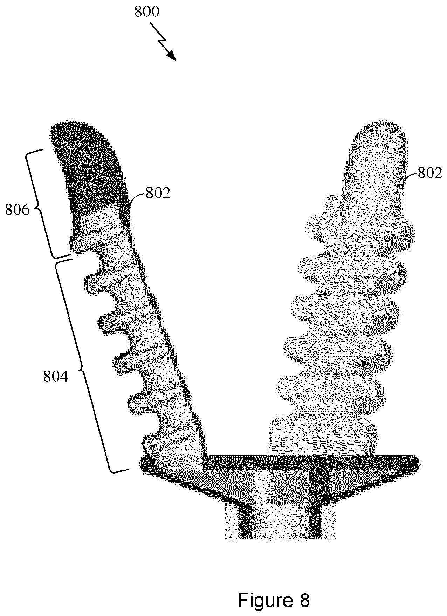

Each gripping member may also include an asymmetrical shape so that the wall thickness of each gripping member is discontinuous over its length. Figure 8 illustrates an example of an asymmetrical shape of a gripping member 802 of a gripping apparatus 800. The variations in wall thickness over the length of the gripping member 802 results in a curvature that is more pronounced in certain portions compared to other, less pronounced portions. As a result, the curvature of each gripping member may include a shape that is similar to that of a human finger. For example, as illustrated in Figure 8, the tip 806 portion of the gripping member 802 is more pronounced in an inward direction toward the other gripping members 802 and includes a curvature on the outside of the gripping member 802, thus mimicking the shape of a human finger. Including a more pronounced inner portion at the tip may further allow each gripping member to function so that only the tip makes contact with the object being picked up, manipulated, etc. The remaining portion 804 of the gripping member 702 may have a less pronounced wall thickness over its length than the tip 806.

As a result of designing the gripping member to include the integrated actuator, the actuator itself becomes the gripping member. The wall thicknesses of each cross-section of the actuator control the movement of the gripping members, which reduces the amount and costs of materials that are needed to manufacture and control the gripping apparatus. For example, an expensive driving system is not needed because the shape of the actuator itself controls the movement of each gripping member. The integrated actuator thus allows the gripping apparatus to be designed and manufactured at a reduced cost. Furthermore, the detailed asymmetrical geometry of each cross-section of the actuator, as described above, and the asymmetrical shape of each gripping member allows the gripping apparatus to be used to accomplish various complex tasks for complex and diverse applications that require more than simple pick up, manipulate, and place operations. For example, the gripping apparatus may be designed to function like a human hand, with each gripping member moving and making contact with an object similar to that of a human finger, thus increasing the functionality and maneuverability of the gripping apparatus. By designing the gripping apparatus to include more precise and exact displacement of each gripping member than that of conventional gripping apparatuses, the gripping apparatus may be designed to handle fragile items that may otherwise be damaged and to perform intricate manipulation processes that were otherwise not possible with less maneuverable grippers.

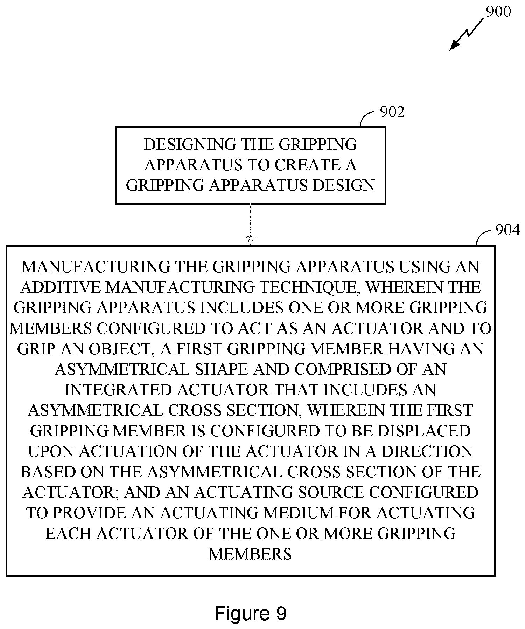

Figure 9 illustrates a method 900 of manufacturing a gripping apparatus. At block 902, the method 900 includes designing the gripping apparatus to create a gripping apparatus design. At block 904, the method includes manufacturing the gripping apparatus using an additive manufacturing technique, wherein the gripping apparatus includes one or more gripping members configured to act as an actuator and to grip an object, a first gripping member having an asymmetrical shape and comprised of an integrated actuator that includes an asymmetrical cross-section, wherein the first gripping member is configured to be displaced upon actuation of the actuator in a direction based on the asymmetrical cross-section of the actuator. The gripping apparatus manufactured using the additive manufacturing technique further includes an actuating source configured to provide an actuating medium for actuating each actuator of the one or more gripping members. In some embodiments, the additive manufacturing technique includes at least one of laser sintering, stereolithography, fused deposition modeling, and a foil-based technique.

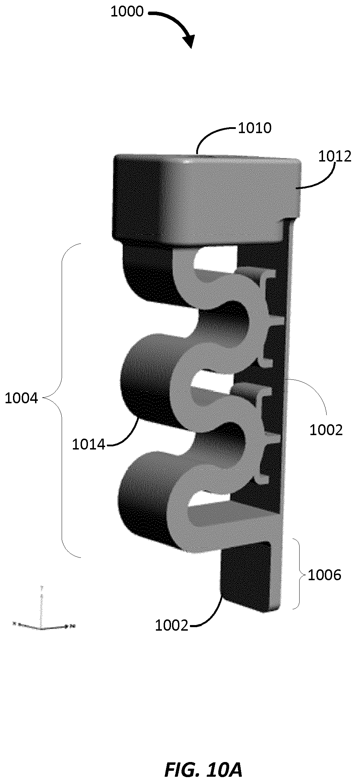

Figures 10A-10D illustrate yet another example of a gripping apparatus 1000. Figure 10A provides a rear perspective view of the gripping apparatus 1000. As shown, the gripping apparatus includes a gripping member 1002 which is shown at the lower portion of the gripping apparatus 1000. The gripping member 1002 extends up along the front side of the gripping apparatus 1000 to a base 1012. The base 1012 may include an inlet 1010 through which an actuating medium may be input from actuating source (not shown). As with previous gripping apparatuses described above, the actuating source may be a separate component that separately attaches to the gripping apparatus 1000. Alternatively, the actuating source may be included as part of the gripping apparatus 1000.

The gripping apparatus 1000 also may include an actuator portion 1004 and a tip portion 1006. The actuator portion 1004 may include a generally curved post with a uniform thickness which extends along most of the length of the gripping member 1002, but ends at the tip portion 1006. In some embodiments, the generally curved post made have different thickness in different areas in order to achieve specified maneuverability properties which allow for the gripping member 1002 to make contact with an object in a desired manner. The actuator portion 1004 may receive an actuating medium from actuating source, thereby causing it to displace in a forward direction. The actuating medium may be delivered through the inlet 1010 provided in the base 1012 of the gripping apparatus 1000.

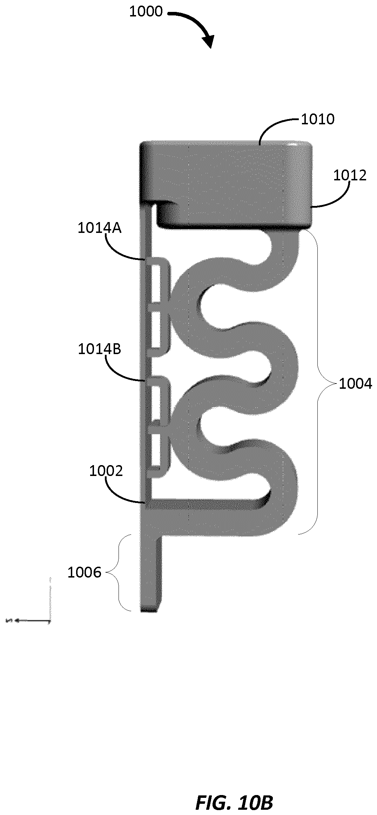

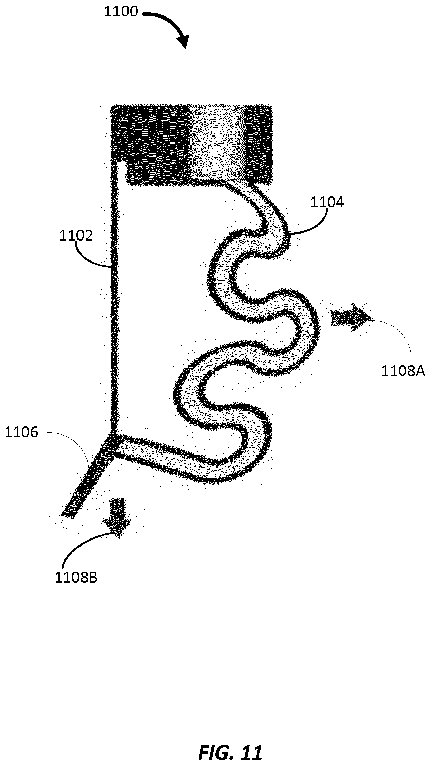

Turning now to Figure 10B, a side view of the gripping apparatus 1000 is provided. Here, two different guiding systems 1014A and 1014B are shown. The guiding systems 1014A and 1014A may be configured to provide support and resistance to the gripping member 1002 and the actuator portion 1004 to prevent the each of them from deforming improperly, excessively, or unexpectedly during the actuation process. An example of the type of deformation that may be prevented by the guiding system is shown in Figure 11. There, a gripping apparatus 1100 without the guiding system is shown. In this example, the tip 1106 of the gripping member 1102 displaces in a forward direction, but because there is no support means present, the actuator portion 1104 flexes excessively downward and rearward as shown by arrows 1108A and 1108B.

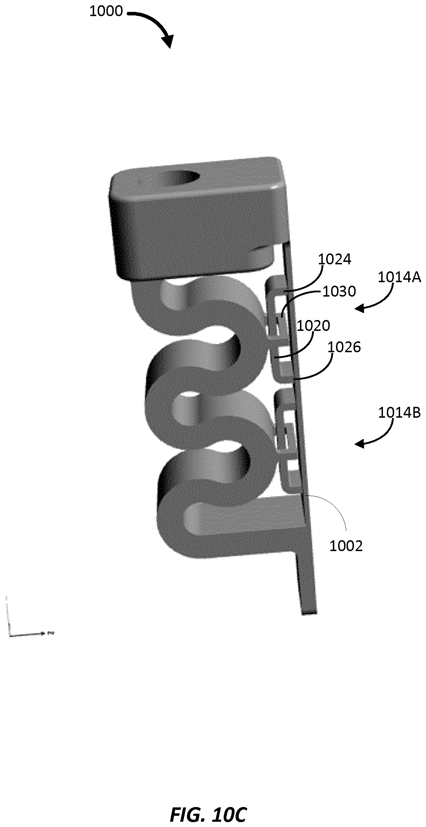

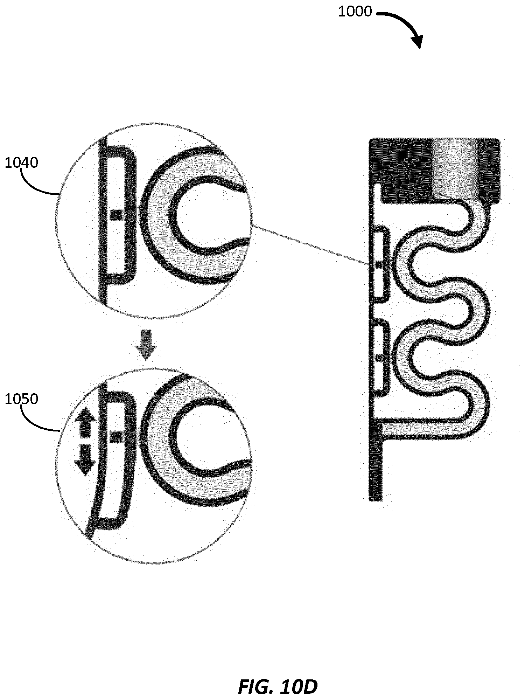

Turning now to Figure 10C, a slightly bird's eye and side perspective view of the gripping apparatus 1000 is provided. In this view, the guiding systems can be seen in more detail. As shown, the guiding systems 1014A and 1014B each include two interlocking components (which may take a form similar to chain links or the like). The first interlocking component 1020 is attached to the gripping member 1002 in two spots, shown in Figure 10C as items 1024 and 1026. The second interlocking component 1030 is also shown in Figure 10C. In this example, the second interlocking component 1030 is attached to the actuator portion 1004 in two locations on either side of the actuator portion 1004. Together, the two interlocking components cooperate to allow the actuator portion 1004 and the gripping member 1002 to flex without pulling away from each other as shown in Figure 11. Figure 10D provides a close up view of how the second interlocking component 1030 can slide in a vertical direction within the first interlocking component 1020 while being simultaneously retained by the interlocking configuration to ensure the actuator portion 1004 does not pull away from the gripping member 1002.

In some embodiments, the asymmetrical cross-section of the actuator includes a first portion that is thicker than a second portion of the actuator to allow the first gripping member to be displaced upon actuation of the actuator in the direction toward the first portion. In some embodiments, the first portion is an inner portion in an area closest to the object to be gripped. For example, as described above with respect to Figure 6A, the asymmetrical cross-section may include a portion A that is thicker than portions B and/or C to allow the gripping member to be displaced in a direction toward portion A.

In some embodiments, the asymmetrical shape of the first gripping member includes a discontinuous wall thickness over a length of the gripping member. For example, as described above with respect to Figure 8, the gripping member may include variations in wall thickness over the length of the gripping member that results in a curvature that is more pronounced in certain portions compared to other portions. The resulting curvature of the gripping member may include a shape similar to that of a human finger. In some embodiments, the gripping member includes a plurality of ridges over the length of the gripping member. The ridges may provide flexibility and may further aid in guiding the displacement of each gripping member in the desired direction.

In some embodiments, the actuator is a pneumatically activated actuator and is configured to be displaced in the desired direction in response to receiving the actuating medium from the actuating source. In some embodiments, the actuating medium includes compressed air or compressed liquid. One of skill in the art will understand that any other appropriate actuating medium may be used to actuate the actuator.

In some embodiments, the gripping apparatus may include three or more gripping members, with each gripping member configured to act as an actuator and to grip the item. In some embodiments, the gripping apparatus includes at least one stationary gripping member. For example, at least one gripping member may not include an actuator and thus may remain stationary while the gripping members comprising of an integrated actuator are displaced. For example, three of four gripping members may comprise of an actuator, and the fourth gripping member may not include an actuator and may thus remain stationary when the actuating medium is supplied to the gripping apparatus.

According to the method illustrated in Figure 9, the gripping apparatus 500, 600, 700, and/or 800 described above may be partially or completely manufactured using additive manufacturing techniques, which allows the apparatus to be efficiently manufactured without requiring the individual manufacture and assembly of each part. Using additive manufacturing techniques thus allows the gripping apparatus to be designed and manufactured at even further reduced costs when combined with the integrated actuator design discussed above.

The invention disclosed herein may be implemented as a method, apparatus, or article of manufacture using standard programming or engineering techniques to produce software, firmware, hardware, or any combination thereof. The term "article of manufacture" as used herein refers to code or logic implemented in hardware or non-transitory computer readable media such as optical storage devices, and volatile or non-volatile memory devices or transitory computer readable media such as signals, carrier waves, etc. Such hardware may include, but is not limited to, field programmable gate arrays (FPGAs), application-specific integrated circuits (ASICs), complex programmable logic devices (CPLDs), programmable logic arrays (PLAs), microprocessors, or other similar processing devices.

It will be appreciated by persons skilled in the art that numerous variations and/or modifications may be made to the invention without departing from the scope of the invention as defined in the appended claims. The above described embodiments are, therefore, to be considered in all respects as illustrative and not restrictive.

## Claims

1. A gripping apparatus (500,700) comprising:
one or more gripping members (502,702) configured to act as an actuator and to grip an object, a first gripping member (502,702) having an asymmetrical shape and comprised of an integrated actuator (504) that includes a plurality of asymmetrical cross-sections (514,516), wherein a first thickness ratio between walls of the integrated actuator at a first asymmetrical cross-section (514) of the plurality of asymmetrical cross-sections is different than a second thickness ratio between the walls of the integrated actuator at a second asymmetrical cross-section (516) of the plurality of asymmetrical cross-sections,
wherein a first part of the first gripping member including the first asymmetrical cross-section is configured to be displaced a first amount upon actuation of the actuator and a second part of the first gripping member including the second asymmetrical cross-section is configured to be displaced a second amount upon actuation of the actuator, wherein the first amount is different than the second amount, wherein the first amount is based on the first thickness ratio and the second amount is based on the second thickness ratio; and an actuating source configured to provide an actuating medium for actuating each actuator of the one or more gripping members.

2. The gripping apparatus of claim 1, wherein the first asymmetrical cross-section (514) of the actuator includes a first portion (A) that is thicker than a second portion (B) of the actuator to allow the first gripping member to be displaced upon actuation of the actuator in a direction toward the first portion (A).

3. The gripping apparatus of claim 2, wherein the first portion (A) is an inner portion in an area closest to the object to be gripped.

4. The gripping apparatus of claim 2, wherein the asymmetrical shape of the first gripping member includes a discontinuous wall thickness over a length of the gripping member.

5. The gripping apparatus of claim 4, wherein the first gripping member includes a plurality of ridges over the length of the first gripping member.

6. The gripping apparatus of claim 1, wherein the actuator (504) is a pneumatically activated actuator and is configured to be displaced in response to receiving the actuating medium from the actuating source, the actuating medium including compressed air or liquid.

7. The gripping apparatus of claim 1, including three or more gripping members (502,702) each gripping member configured to act as an actuator and to grip the object.

8. The gripping apparatus of claim 7, wherein at least two of the gripping members have different asymmetrical shapes and are configured to displace by different amounts when actuated.

9. The gripping apparatus of claim 1, wherein the gripping apparatus is manufactured using an additive manufacturing technique, including at least one of laser sintering, stereolithography, fused deposition modeling, and a foil-based technique.

10. The gripping apparatus of claim 1, further comprising at least one stationary gripping member.

11. A method of manufacturing a gripping apparatus, the method comprising:
designing the gripping apparatus to create a gripping apparatus design; and
manufacturing the gripping apparatus using an additive manufacturing technique, wherein the gripping apparatus (500,700) includes:
one or more gripping members (502,702) configured to act as an actuator and to grip an object, a first gripping member (502,702) having an asymmetrical shape and comprised of an integrated actuator (504) that includes a plurality of asymmetrical cross-sections (514,516), wherein a first thickness ratio between walls of the integrated actuator at a first asymmetrical cross-section (514) of the plurality of asymmetrical cross-sections is different than a second thickness ratio between the walls of the integrated actuator at a second asymmetrical cross-section (516) of the plurality of asymmetrical cross-sections,
wherein a first part of the first gripping member including the first asymmetrical cross-section is configured to be displaced a first amount upon actuation of the actuator and a second part of the first gripping member including the second asymmetrical cross-section is configured to be displaced a second amount upon actuation of the actuator, wherein the first amount is different than the second amount, wherein the first amount is based on the first thickness ratio and the second amount is based on the second thickness ratio; and an actuating source configured to provide an actuating medium for actuating each actuator of the one or more gripping members.

12. The method of claim 11, wherein the first asymmetrical cross-section (514) of the actuator includes a first portion (A) that is thicker than a second portion (B) of the actuator to allow the first gripping member to be displaced upon actuation of the actuator in a direction toward the first portion (A).

13. The method of claim 12, wherein the first portion (A) is an inner portion in an area closest to the object to be gripped.

14. The method of claim 12, wherein the asymmetrical shape of the first gripping member includes a discontinuous wall thickness over a length of the gripping member.

15. The method of claim 11, wherein the additive manufacturing technique includes at least one of laser sintering, stereolithography, fused deposition modeling, and a foil-based technique.

## Patentansprüche

1. Ein Greifgerät (500, 700), das umfasst:
ein oder mehrere Greifelemente (502, 702), die ausgelegt sind, um als ein Aktuator zu wirken und ein Objekt zu ergreifen, wobei ein erstes Greifelement (502, 702) eine asymmetrische Form aufweist und aus einem integrierten Aktuator (504) besteht, der eine Vielzahl asymmetrischer Querschnitte (514, 516) beinhaltet,
wobei ein erstes Stärkenverhältnis zwischen Wänden des integrierten Aktuators an einem ersten asymmetrischen Querschnitt (514) der Vielzahl asymmetrischer Querschnitte von einem zweiten Stärkenverhältnis zwischen den Wänden des integrierten Aktuators an einem zweiten asymmetrischen Querschnitt (516) der Vielzahl asymmetrischer Querschnitte unterschiedlich ist,
wobei ein erstes Teil des ersten Greifelements, das den ersten asymmetrischen Querschnitt beinhaltet, dazu ausgelegt ist, bei Betätigung des Aktuators um eine erste Menge verlagert zu werden, und ein zweites Teil des ersten Greifelements, das den zweiten asymmetrischen Querschnitt beinhaltet, dazu ausgelegt ist, bei Betätigung des Aktuators um eine zweite Menge verlagert zu werden, wobei die erste Menge von der zweiten Menge unterschiedlich ist, wobei die erste Menge auf dem ersten Stärkenverhältnis basiert, und die zweite Menge auf dem zweiten Stärkenverhältnis basiert; und eine Betätigungsquelle, die ausgelegt ist, um ein Betätigungsmedium zum Betätigen jedes Aktuators des einen oder der mehreren Greifelemente bereitzustellen.

2. Das Greifgerät nach Anspruch 1, wobei der erste asymmetrische Querschnitt (514) des Aktuators einen ersten Abschnitt (A) beinhaltet, der stärker ist als ein zweiter Abschnitt (B) des Aktuators, um es dem ersten Greifelement zu erlauben, bei Betätigung des Aktuators in eine Richtung zu dem ersten Abschnitt (A) verlagert zu werden.

3. Das Greifgerät nach Anspruch 2, wobei der erste Abschnitt (A) ein Innenabschnitt in einer Fläche ist, die dem Objekt, das zu erfassen ist, am nächsten liegt.

4. Das Greifgerät nach Anspruch 2, wobei die asymmetrische Form des ersten Greifelements eine diskontinuierliche Wandstärke über eine Länge des Greifelements beinhaltet.

5. Das Greifgerät nach Anspruch 4, wobei das erste Greifelement eine Vielzahl von Rippen über die Länge des ersten Greifelements beinhaltet.

6. Das Greifgerät nach Anspruch 1, wobei der Aktuator (504) ein pneumatisch aktivierter Aktuator ist und ausgelegt ist, um als Reaktion auf das Empfangen des Betätigungsmediums aus der Betätigungsquelle verlagert zu werden, wobei das Betätigungsmedium Pressluft oder komprimierte Flüssigkeit beinhaltet.

7. Das Greifgerät nach Anspruch 1, das drei oder mehr Greifelemente (502, 702) beinhaltet, wobei jedes Greifelement ausgelegt ist, um als ein Aktuator zu wirken und das Objekt zu ergreifen.

8. Das Greifgerät nach Anspruch 7, wobei mindestens zwei der Greifelemente unterschiedliche asymmetrische Formen aufweisen und dazu ausgelegt sind, sich um unterschiedliche Mengen zu verlagern, wenn sie betätigt werden.

9. Das Greifgerät nach Anspruch 1, wobei das Greifgerät unter Verwenden einer additiven Herstellungstechnik hergestellt wird, die mindestens eine von Lasersintern, Stereolithographie, Fused Deposition Modeling und eine auf Folie basierende Technik beinhaltet.

10. Das Greifgerät nach Anspruch 1, das weiter mindestens ein stationäres Greifelement umfasst.

11. Ein Verfahren zum Herstellen eines Greifgeräts, wobei das Verfahren umfasst:
Konzipieren des Greifgeräts, um ein Greifgerätkonzept zu bilden; und
Herstellen des Greifgeräts unter Verwenden einer additiven Herstellungstechnik, wobei das Greifgerät (500, 700) beinhaltet:
ein oder mehrere Greifelemente (502, 702), die ausgelegt sind, um als ein Aktuator zu wirken und ein Objekt zu ergreifen, ein erstes Greifelement (502, 702), das eine asymmetrische Form aufweist und aus einem integrierten Aktuator (504) besteht, der eine Vielzahl asymmetrischer Querschnitte (514, 516) beinhaltet,
wobei ein erstes Stärkenverhältnis zwischen Wänden des integrierten Aktuators an einem ersten asymmetrischen Querschnitt (514) der Vielzahl asymmetrischer Querschnitte von einem zweiten Stärkenverhältnis zwischen den Wänden des integrierten Aktuators an einem zweiten asymmetrischen Querschnitt (516) der Vielzahl asymmetrischer Querschnitte unterschiedlich ist,
wobei ein erstes Teil des ersten Greifelements, das den ersten asymmetrischen Querschnitt beinhaltet, dazu ausgelegt ist, bei Betätigung des Aktuators um eine erste Menge verlagert zu werden, und ein zweites Teil des ersten Greifelements, das den zweiten asymmetrischen Querschnitt beinhaltet, dazu ausgelegt ist, bei Betätigung des Aktuators um eine zweite Menge verlagert zu werden, wobei die erste Menge von der zweiten Menge unterschiedlich ist, wobei die erste Menge auf dem ersten Stärkenverhältnis basiert, und die zweite Menge auf dem zweiten Stärkenverhältnis basiert; und eine Betätigungsquelle, die ausgelegt ist, um ein Betätigungsmedium zum Betätigen jedes Aktuators des einen oder der mehreren Greifelemente bereitzustellen.

12. Das Verfahren nach Anspruch 11, wobei der erste asymmetrische Querschnitt (514) des Aktuators einen ersten Abschnitt (A) beinhaltet, der stärker ist als ein zweiter Abschnitt (B) des Aktuators, um es dem ersten Greifelement zu erlauben, bei Betätigung des Aktuators in eine Richtung zu dem ersten Abschnitt (A) verlagert zu werden.

13. Das Verfahren nach Anspruch 12, wobei der erste Abschnitt (A) ein Innenabschnitt in einer Fläche ist, die dem Objekt, das zu ergreifen ist, am nächsten liegt.

14. Das Verfahren nach Anspruch 12, wobei die asymmetrische Form des ersten Greifelements eine diskontinuierliche Wandstärke über eine Länge des Greifelements beinhaltet.

15. Das Verfahren nach Anspruch 11, wobei die additive Herstellungstechnik mindestens eine von Lasersintern, Stereolithographie, Fused Deposition Modeling und eine auf Folie basierende Technik beinhaltet.

## Revendications

1. Un appareil de préhension (500, 700) comprenant:
un ou plusieurs éléments de préhension (502, 702) configurés pour faire office d'actionneur et pour saisir un objet, un premier élément de préhension (502, 702) ayant une forme asymétrique et étant constitué d'un actionneur intégré (504) qui inclut une pluralité de sections transversales asymétriques (514, 516),
dans lequel un premier rapport d'épaisseur entre des parois de l'actionneur intégré au niveau d'une première section transversale asymétrique (514) de la pluralité de sections transversales asymétriques est différent d'un second rapport d'épaisseur entre les parois de l'actionneur intégré au niveau d'une seconde section transversale asymétrique (516) de la pluralité de sections transversales asymétriques,
dans lequel une première partie du premier élément de préhension incluant la première section transversale asymétrique est configurée pour être déplacée d'une première quantité lors de l'actionnement de l'actionneur et une seconde partie du premier élément de préhension incluant la seconde section transversale asymétrique est configurée pour être déplacée d'une seconde quantité lors de l'actionnement de l'actionneur, dans lequel la première quantité est différente de la seconde quantité, dans lequel la première quantité est basée sur le premier rapport d'épaisseur et la seconde quantité est basée sur le second rapport d'épaisseur ; et une source d'actionnement configurée pour fournir un milieu d'actionnement pour actionner chaque actionneur du ou des éléments de préhension.

2. Un appareil de préhension selon la revendication 1, dans lequel la première section transversale asymétrique (514) de l'actionneur inclut une première partie (A) qui est plus épaisse qu'une seconde partie (B) de l'actionneur pour permettre au premier élément de préhension d'être déplacé lors de l'actionnement de l'actionneur dans une direction vers la première partie (A).

3. Un appareil de préhension selon la revendication 2, dans lequel la première partie (A) est une partie interne dans la zone la plus proche de l'objet à saisir.

4. Un appareil de préhension selon la revendication 2, dans lequel la forme asymétrique du premier élément de préhension inclut une épaisseur de paroi discontinue sur une longueur de l'élément de préhension.

5. Un appareil de préhension selon la revendication 4, dans lequel le premier élément de préhension inclut une pluralité de nervures sur la longueur du premier élément de préhension.

6. Un appareil de préhension selon la revendication 1, dans lequel l'actionneur (504) est un actionneur actionné pneumatiquement et est configuré pour être déplacée à la suite de la réception du milieu d'actionnement en provenance de la source d'actionnement, le milieu d'actionnement incluant de l'air, ou un liquide, comprimé.

7. Un appareil de préhension selon la revendication 1, incluant au moins trois éléments de préhension (502, 702), chaque élément de préhension étant configuré pour faire office d'actionneur et pour saisir l'objet.

8. Un appareil de préhension selon la revendication 7, dans lequel au moins deux des éléments de préhension présentent des formes asymétriques différentes et sont configurés pour être déplacés de différentes quantités lorsqu'ils sont actionnés.

9. Un appareil de préhension selon la revendication 1, dans lequel l'appareil de préhension est fabriqué à l'aide d'une technique de fabrication additive, incluant le frittage par laser et/ou la stéréolithographie et/ou un dépôt de fil en fusion et/ou une technique à base de feuille.

10. Un appareil de préhension selon la revendication 1, comprenant en outre au moins un élément de préhension fixe.

11. Un procédé de fabrication d'un appareil de préhension, le procédé comprenant :
la désignation de l'appareil de préhension pour créer une conception d'appareil de préhension ; et
la fabrication de l'appareil de préhension à l'aide d'une technique de fabrication additive, dans lequel l'appareil de préhension (500, 700) inclut :
un ou plusieurs éléments de préhension (502, 702) configurés pour faire office d'actionneur et pour saisir un objet, un premier élément de préhension (502, 702) ayant une forme asymétrique et étant constitué d'un actionneur intégré (504) qui inclut une pluralité de sections transversales asymétriques (514, 516),
dans lequel un premier rapport d'épaisseur entre des parois de l'actionneur intégré au niveau d'une première section transversale asymétrique (514) de la pluralité de sections transversales asymétriques est différent d'un second rapport d'épaisseur entre les parois de l'actionneur intégré au niveau d'une seconde section transversale asymétrique (516) de la pluralité de sections transversales asymétriques,
dans lequel une première partie du premier élément de préhension incluant la première section transversale asymétrique est configurée pour être déplacée d'une première quantité lors de l'actionnement de l'actionneur et une seconde partie du premier élément de préhension incluant la seconde section transversale asymétrique est configurée pour être déplacée d'une seconde quantité lors de l'actionnement de l'actionneur, dans lequel la première quantité est différente de la seconde quantité, dans lequel la première quantité est basée sur le premier rapport d'épaisseur et la seconde quantité est basée sur le second rapport d'épaisseur ; et une source d'actionnement configurée pour fournir un milieu d'actionnement pour actionner chaque actionneur du ou des éléments de préhension.

12. Un appareil selon la revendication 11, dans lequel la première section transversale asymétrique (514) de l'actionneur inclut une première partie (A) qui est plus épaisse qu'une seconde partie (B) de l'actionneur pour permettre au premier élément de préhension d'être déplacé lors de l'actionnement de l'actionneur dans une direction vers la première partie (A).

13. Un appareil selon la revendication 12, dans lequel la première partie (A) est une partie interne dans la zone la plus proche de l'objet à saisir.

14. Un appareil selon la revendication 12, dans lequel la forme asymétrique du premier élément de préhension inclut une épaisseur de paroi discontinue sur une longueur de l'élément de préhension.

15. Un appareil selon la revendication 11, dans lequel la technique de fabrication additive inclut le frittage par laser et/ou la stéréolithographie et/ou un dépôt de fil en fusion et/ou une technique à base de feuille.
